# EUROPÄISCHE PATENTSCHRIFT

(11) **EP 3 522 256 B1**
(45) Veröffentlichungstag und Bekanntmachung des Hinweises auf die Patenterteilung: **16.12.2020**
(21) Anmeldenummer: 19150871.2
(22) Anmeldetag: 09.01.2019
(51) Int. Cl.: H01M 2/10, H01M 10/613, H01M 10/625, H01M 10/6556, H01M 10/6554

(54) **ENERGIESPEICHERANORDNUNG**
ENERGY STORAGE ASSEMBLY
DISPOSITIF ACCUMULATEUR D'ÉNERGIE

(30) Priorität: 31.01.2018 DE 102018201491
(43) Veröffentlichungstag der Anmeldung: 07.08.2019
(73) Patentinhaber: Siemens Mobility GmbH, 81739 München (DE)
(72) Erfinder: Teichmann, Stefan, 91325 Adelsdorf (DE); Schenkel, Mathias Wesley, 90475 Nürnberg (DE)

(56) Entgegenhaltungen:
- DE-A1-102004 005 394
- DE-A1-102008 014 155
- DE-A1-102011 015 337
- DE-A1-102011 084 536
- DE-A1-102016 204 720
- US-A1- 2010 136 405

## Beschreibung

Die Erfindung betrifft eine Energiespeicheranordnung, einen Container für eine solche Energiespeicheranordnung sowie ein Fahrzeug mit einer solchen Energiespeicheranordnung oder einen solchen Container. Die Energiespeicheranordnung bzw. der Container sind insbesondere an einem Fahrzeug mit Elektroantrieb montierbar, wobei ein Energiespeicher Energie zum Betreiben eines oder mehrerer Elektromotoren des Fahrzeugs bereitstellt.

Elektrofahrzeuge, die ausschließlich mit einem Elektromotor betrieben werden oder so genannte Hybridfahrzeuge, die zusätzlich zu einem Verbrennungsmotor auch noch einen oder mehrere Elektromotoren aufweisen, benötigen zur Bereitstellung der elektrischen Energie zum Betreiben des Elektromotors bzw. Traktionsmotors einen vergleichsweise großen Bauraum in dem Fahrzeug für die Unterbringung einer Batterie. Eine solche auch als Traktionsbatterie bezeichnete Batterie umfasst üblicherweise mehrere Batteriemodule bzw. Batteriestränge mit jeweils einer Mehrzahl Batteriezellen, die untereinander verschaltet werden. Für spurgebundene Fahrzeuge wie beispielsweise Triebzüge, welche auf elektrifizierten Strecken verkehren und über beispielsweise eine Oberleitung mit elektrischer Energie versorgt werden, wird für einen Einsatz auf nicht elektrifizierten Strecken bzw. Streckenabschnitten ebenfalls eine Energieversorgung mittels einer oder mehrerer Traktionsbatterien angedacht. Ein solcher Triebzug wird nachfolgend als Batteriehybridzug bezeichnet.

Die Batteriemodule bzw. Batteriestränge können beispielsweise in einem Container angeordnet werden, der in oder an dem Elektrofahrzeug montiert ist. Bei einem Batteriehybridzugkann ein derartiger Container beispielsweise an einem Wagenkasten, insbesondere auf dem Dach oder im Unterflurbereich des Wagenkastens, angeordnet werden, wobei insbesondere Anforderungen bezüglich des Gesamtgewichts und der Abmaße des Containers zu beachten sind.

Um eine Überhitzung der Traktionsbatterie aufgrund einer beim Laden oder Entladen entstehenden hohen Verlustleistung zu verhindern, und damit die Lebensdauer der Batterie zu erhöhen, ist es erforderlich, die Batteriezellen der Batteriemodule in dem Container mittels einer Kühlvorrichtung zu kühlen. Relevanter Stand der Technik ist in den Druckschriften DE 10 2008 014155 A1, DE 10 2011 084536 A1, DE 10 2011 015337 A1, DE 10 2004 005394 A1, US 2010/136405 A1 und DE 10 2016 204720 A1 offenbart.

Aufgabe der vorliegenden Erfindung ist es, eine Energiespeicheranordnung anzugeben, welche eine erforderliche Kühlleistung bei gleichzeitig geringem Gewicht und kleinem erforderlichen Bauraum ermöglicht. Diese Aufgabe wird durch eine Energiespeicheranordnung, einen Container für eine Energiespeicheranordnung sowie ein Fahrzeug mit einer Energiespeicheranordnung bzw. einem Container gemäß den unabhängigen Patentansprüchen gelöst. Weiterbildungen der Erfindung sind in jeweils abhängigen Patentansprüchen angegeben.

Gemäß einem ersten Aspekt der Erfindung umfasst eine Energiespeicheranordnung einen Stapel aus mehreren Batteriemodulen, wobei die Batteriemodule jeweils Batteriezellen und zumindest eine Kühlplatte zum Kühlen der Batteriezellen umfassen, sowie zumindest eine Kühlmittelverteilerplatte, welche an einer Seite des Stapels angeordnet ist und welche zumindest ein Kühlkreislaufsystem zur Kühlung der Batteriezellen der Batteriemodule aufweist. Das Kühlkreislaufsystem umfasst dabei eine Mehrzahl von Verteilerkanälen zum Verteilen einer Kühlflüssigkeit auf die Kühlplatten, wobei die Verteilerkanäle jeweils als in das Material der Kühlmittelverteilerplatte eingebrachte Kanäle ausgebildet sind.

Erfindungsgemäß umfasst das Kühlkreislaufsystem einen Kühlverteiler zum Verteilen der Kühlflüssigkeit auf die Verteilerkanäle, weist der Kühlverteiler zumindest einen Zuführungskanal zum Zuführen der Kühlflüssigkeit zu den Batteriemodulen und zumindest einen Rückführungskanal zur Rückführung der Kühlflüssigkeit von den Batteriemodulen auf, und ist der Zuführungskanal und der Rückführungskanal jeweils als eine Einfräsung in der zumindest einen Kühlmittelverteilerplatte ausgebildet.

Die Verteilerkanäle sowie die Zuführ- und Rückführungskanäle können insbesondere derart in die zumindest eine Kühlmittelverteilerplatte gefräst sein, dass die Energiespeicheranordnung zwei oder mehr Kühlkreislaufsysteme und somit eine redundante Kühlmittelverteilung aufweist. Die Kühlmittelverteilerplatten können dabei insbesondere auch die Funktion einer aktiven Containerkühlung durch Oberflächenkühlung übernehmen. Basierend auf der vorherigen Weiterbildung ist die erfindungsgemäße Energiespeicheranordnung gemäß einer weiteren Weiterbildung derart ausgestaltet, dass die zumindest eine Kühlmittelverteilerplatte eine erste Kühlmittelverteilerplatte, die an einer ersten Seite des Stapels angeordnet ist, und eine zweite Kühlmittelverteilerplatte, die an einer zweiten, der ersten Seite des Stapels gegenüber liegenden Seite angeordnet ist, umfasst, und dass der zumindest eine Zuführungskanal an der ersten Kühlmittelverteilerplatte angeordnet ist und der zumindest eine Rückführungskanal an der zweiten Kühlmittelverteilerplatte angeordnet ist.

Gemäß einer weiteren Weiterbildung ist zumindest auf der dem Stapel zuweisenden Seite der Kühlmittelverteilerplatte eine Trägerplatte als Tragstruktur angeordnet, und sind die Batteriemodule an der Trägerplatte der Kühlmittelverteilerplatte befestigt. Gemäß einer Ausführungsform kann insbesondere auf jeder Seite der zumindest einen Kühlmittelverteilerplatte eine Trägerplatte angeordnet sein, welche zusammen mit der Kühlmittelverteilerplatte als Tragstruktur für die Batteriemodule dienen. Die Batteriemodule sind dazu an den Trägerplatten, beispielsweise mittels einer Verschraubung, befestigt.

Vorteilhaft kann durch die Integration der Kühlmittelverteilung in die Tragstruktur für die Batteriemodule eine vergleichsweise geringe Breite bzw. Länge der Energiespeicheranordnung verwirklicht werden. Gleichzeitig können vorteilhaft Beschränkungen hinsichtlich beispielsweise des Gesamtgewichts der Anordnung, welches insbesondere bei der Montage einer Traktionsbatterie an dem Wagenkasten eines Batteriehybridzuges von Bedeutung ist, erfüllt werden.

Erfindungsgemäß weist das mindestens eine Kühlkreislaufsystem eine Mehrzahl Vorlaufkanäle zum Transport der Kühlflüssigkeit von dem zumindest einen Zuführungskanal zu den Kühlplatten sowie eine Mehrzahl Rücklaufkanäle zum Abtransport der Kühlflüssigkeit von den Kühlplatten zu dem zumindest einen Rückführungskanal auf. Dabei sind die Vorlaufkanäle und die Rücklaufkanäle jeweils als eine Einfräsung in der Kühlmittelverteilerplatte ausgebildet. Das Kühlkreislaufsystem ist somit in die Kühlmittelverteilerplatten integriert, wodurch sich vorteilhaft ein geringer Bauraum ergibt. Die Kühlmittelverteilerplatte kann dabei beispielsweise eine Dicke zwischen 30 mm und 50 mm aufweisen.

Gemäß einer auf der vorstehenden Weiterbildung basierenden weiteren Weiterbildung sind die Vorlaufkanäle und der zumindest eine Zuführungskanal derart in die Kühlmittelverteilerplatte eingefräst, dass die Vorlaufkanäle in den Zuführungskanal einmünden, und sind die Rücklaufkanäle und der zumindest eine Rückführungskanal derart in die Kühlmittelverteilerplatte eingefräst, dass die Rücklaufkanäle in den Rückführungskanal einmünden.

Gemäß einer weiteren Weiterbildung sind die Kühlplatten mittels Hohlschrauben mit der an der zumindest einen Kühlmittelverteilerplatte angeordneten Trägerplatte verschraubt.

Gemäß einer auf der vorstehenden Weiterbildung basierenden weiteren Weiterbildung ragt zumindest eine Hohlschraube in einen jeweiligen Vorlaufkanal hinein, sodass jeder Vorlaufkanal durch zumindest eine Hohlschraube mit einer Kühlplatte strömungsmäßig verbunden ist, und ragt zumindest eine Hohlschraube in einen jeweiligen Rücklaufkanal hinein, sodass jeder Rücklaufkanal durch zumindest eine Hohlschraube mit einer Kühlplatte strömungsmäßig verbunden ist.

Die einzelnen Kühlplatten der Batteriemodule werden somit beispielsweise über Hohlschrauben mit den Kühlmittelverteilerplatten beziehungsweise den Trägerplatten verbunden. Die Kühlflüssigkeit fließt durch die Hohlschrauben von den Vorlaufkanälen in die Kühlplatten und von den Kühlplatten durch die Hohlschrauben in die Rücklaufkanäle. An den Hohlschrauben ergibt sich dabei beispielsweise eine Umlenkung des Kühlmittelstroms aus den Vorlaufkanälen in die Kühlplatten beziehungsweise aus den Kühlplatten in die Rücklaufkanäle um 90°. Gemäß einer weiteren Weiterbildung sind die mehreren Batteriemodule zwischen der ersten und der zweiten Kühlmittelverteilerplatte pyramidenförmig gestapelt.

Gemäß einer weiteren Weiterbildung sind die mehreren Batteriemodule untereinander als eine Traktionsbatterie verschaltet.

Ein zweiter Aspekt der vorliegenden Erfindung betrifft einen Container zur Aufnahme von Batteriemodulen. Dieser umfasst eine Bodenplatte, auf der ein Stapel aus einer Mehrzahl Batteriemodulen anordenbar ist, und eine Energiespeicheranordnung gemäß des ersten Aspektes.

Gemäß einer Weiterbildung des zweiten Aspekts umfasst der Container ferner zumindest eine auf der dem Stapel zuweisenden Seite der Kühlmittelverteilerplatte angeordnete Trägerplatte als Tragstruktur zur Befestigung der Batteriemodule. Gemäß einer auf der vorstehenden Weiterbildung basierenden weiteren Weiterbildung ist die zumindest eine Trägerplatte mittels Hohlschrauben mit Kühlplatten 16) der Batteriemodule verschraubbar, und die Hohlschrauben ragen für eine strömungsmäßige Verbindung mit den Kühlplatten in die Verteilerkanäle hinein.

Gemäß einer weiteren Weiterbildung des zweiten Aspekts umfasst die zumindest eine Kühlmittelverteilerplatte eine erste Kühlmittelverteilerplatte, die an einer ersten Seite des Stapels angeordnet ist, und eine zweite Kühlmittelverteilerplatte, die an einer zweiten, der ersten Seite des Stapels gegenüber liegenden Seite angeordnet ist.

Gemäß einer weiteren Weiterbildung des zweiten Aspekts sind die Batteriemodule auf der Bodenplatte pyramidenförmig stapelbar.

Ein dritter Aspekt der vorliegenden Erfindung betrifft ein Fahrzeug, welches zumindest eine Energiespeicheranordnung gemäß dem ersten Aspekt oder einen Container gemäß dem zweiten Aspekt der vorliegenden Erfindung aufweist. Gemäß einer Weiterbildung kann das Fahrzeug dabei als ein spurgebundenes Fahrzeug, insbesondere als ein Triebzug und speziell als ein Batteriehybridzug ausgestaltet sein.

Die Erfindung wird im Folgenden anhand von Figuren, die Ausführungsbeispiele der Erfindung zeigen, näher erläutert. Es zeigen:
Figur 1 eine Ausführungsform einer Energiespeicheranordnung mit einem Stapel aus mehreren Batteriemodulen in einem Container mit Kühlmittelverteilerplatten,
Figur 2 eine Ausführungsform eines Containers mit Kühlmittelverteilerplatten und Trägerplatten zur Aufnahme von Batteriemodulen,
Figur 3 eine Ausführungsform einer ersten Kühlmittelverteilerplatte zur Verteilung einer Kühlflüssigkeit auf Batteriemodule,
Figur 4 eine Ausführungsform einer zweiten Kühlmittelverteilerplatte zur Verteilung einer Kühlflüssigkeit auf Batteriemodule,
Figur 5 einen Ausschnitt aus einer Kühlmittelverteilerplatte und einer Trägerplatte mit einer Hohlschraube zur Befestigung von Kühlplatten an der Trägerplatte,
Figur 6 eine Ausführungsform einer Kühlmittelverteilerplatte mit Trägerplatten als Tragstruktur zum Tragen von Batteriemodulen.

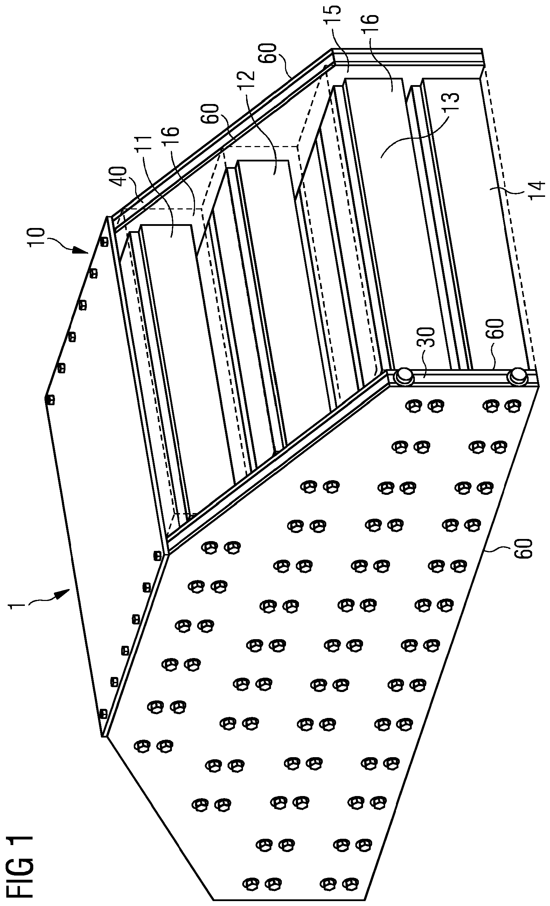

Figur 1 zeigt eine Ausführungsform einer Energiespeicheranordnung 1 mit einem Stapel 10 aus mehreren Batteriemodulen bzw. Batteriesträngen 11, 12, 13 und 14, die in dem Stapel 10 über- und nebeneinander angeordnet sind. Die Batteriemodule umfassen jeweils eine Vielzahl von nicht speziell dargestellten Batteriezellen 15 sowie Kühlplatten 16 zum Kühlen der Batteriezellen 15. Die Batteriemodule 11, 12, 13, 14 können untereinander zur Realisierung einer Traktionsbatterie zum Bereitstellen einer Energieversorgung für einen oder mehrere Elektromotoren eines Elektro- oder Hybridfahrzeugs, beispielsweise eines Batteriehybridzugs, verschaltet sein.

Die Energiespeicheranordnung 1 umfasst des Weiteren eine erste Kühlmittelverteilerplatte 30, die an einer ersten Seite des Stapels 10 aus den mehreren Batteriemodulen 11, 12, 13 und 14 angeordnet ist. Des Weiteren umfasst die Energiespeicheranordnung 1 in dem Beispiel der Figur 1 eine zweite Kühlmittelverteilerplatte 40, die an einer zweiten, der ersten Seite gegenüberliegenden Seite des Stapels 10 aus den mehreren Batteriemodulen 11, 12, 13 und 14 angeordnet ist. Die Energiespeicheranordnung 1 umfasst ferner mindestens ein Kühlkreislaufsystem 100, 200 zur Kühlung der Batteriemodule 11, 12, 13 und 14 mittels einer Kühlflüssigkeit.

Das mindestens eine Kühlkreislaufsystem 100 umfasst eine Vielzahl von Verteilerkanälen 111, 112, 120, 130 zum Verteilen der Kühlflüssigkeit auf die Kühlplatten 16. Die Verteilerkanäle 111, 112, 120, 130 sind jeweils als in das Material der ersten und zweiten Kühlmittelverteilerplatte 30, 40 eingebrachte Kanäle ausgebildet. Die Verteilerkanäle sind als Einfräsungen in dem Material der ersten und zweiten Kühlmittelverteilerplatte 30, 40 ausgestaltet.

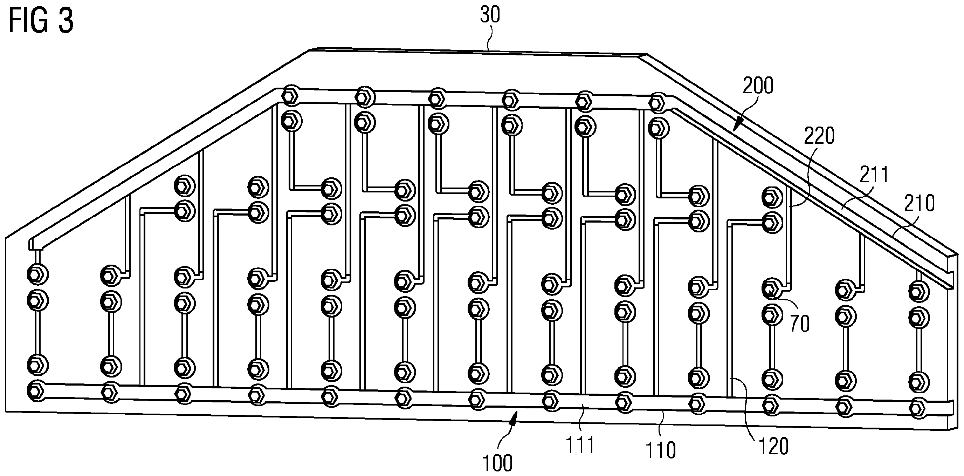

Das mindestens eine Kühlkreislaufsystem 100 ist somit in die Kühlmittelverteilerplatten 30 und 40 integriert. Auf die Ausgestaltung des mindestens einen Kühlkreislaufsystems 100 wird weiter unten, insbesondere unter Bezugnahme auf die Figuren 3, 4 und 5, näher eingegangen.

Auf jeder Seite der ersten Kühlmittelverteilerplatte 30 und der zweiten Kühlmittelverteilerplatte 40 ist jeweils eine Trägerplatte 60 angeordnet, wobei alternativ eine Anordnung einer Trägerplatte 60 an der Innenseite, d.h. dem Stapel Batteriemodule zuweisenden Seite in gleicher Weise möglich ist. Die Trägerplatten 60 sind als eine Tragstruktur für die mehreren Batteriemodule 11, 12, 13 und 14 ausgebildet. Die Batteriemodule 11, 12, 13 und 14 sind an den Trägerplatten 60 befestigt, beispielsweise mittels Schraubverbindungen.

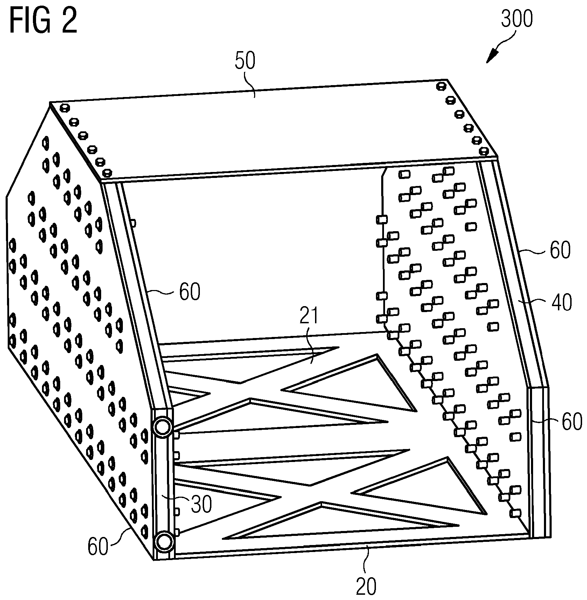

Figur 2 zeigt einen beispielhaften Container 300, der die beiden Kühlmittelverteilerplatten 30 und 40 sowie die daran angeordneten Trägerplatten 60 als Tragstruktur für die Batteriemodule aufweist. Der Container 300 umfasst des Weiteren eine Bodenplatte 20, auf der der Stapel 10 aus den Batteriemodulen 11, 12, 13 und 14 angeordnet ist, sowie eine Abdeckplatte 50. Wie anhand von Figur 2 deutlich wird, kann die Bodenplatte 20 eine Fachwerkstruktur aufweisen. Durch die Fachwerkstruktur der Bodenplatte 20 wird ein Schubfeld 21 realisiert, das eine gute Kraftübertragung und eine Aussteifung der Batteriemodule ermöglicht.

Der Container 300 dient zur Aufnahme der Batteriemodule und kann an einem Fahrzeug, beispielsweise auf dem Dach eines Wagenkastens eines Triebzugs, montiert werden. Bei der in Figur 1 dargestellten Ausführungsform sind die Batteriemodule 11, 12, 13 und 14 in senkrechter Richtung in vier Batterieebenen in dem Container 300 angeordnet. Die Batteriemodule 11, 12, 13 und 14 können dabei beispielsweise ein Gesamtgewicht von 800 kg aufweisen.

Wie anhand von Figur 1 deutlich wird, sind die Batteriemodule 11, 12, 13 und 14 zwischen der ersten und der zweiten Kühlmittelverteilerplatte 30 und 40 beziehungsweise den darauf angeordneten Trägerplatten 60 innerhalb des Containers pyramidenförmig gestapelt. Die Kühlmittelverteilerplatten 30, 40 beziehungsweise die darauf angeordneten Trägerplatten 60 weisen insbesondere zur Einhaltung eines vorgegebenen Lichtraumprofils ein abgeflachtes dreieckförmiges Profil auf. Durch eine derartige Ausgestaltung weist die Energiespeicheranordnung 1 bei geringem Bauraum eine hohe Batteriekapazität auf, so dass eine hohe Leistung zur Verfügung gestellt werden kann.

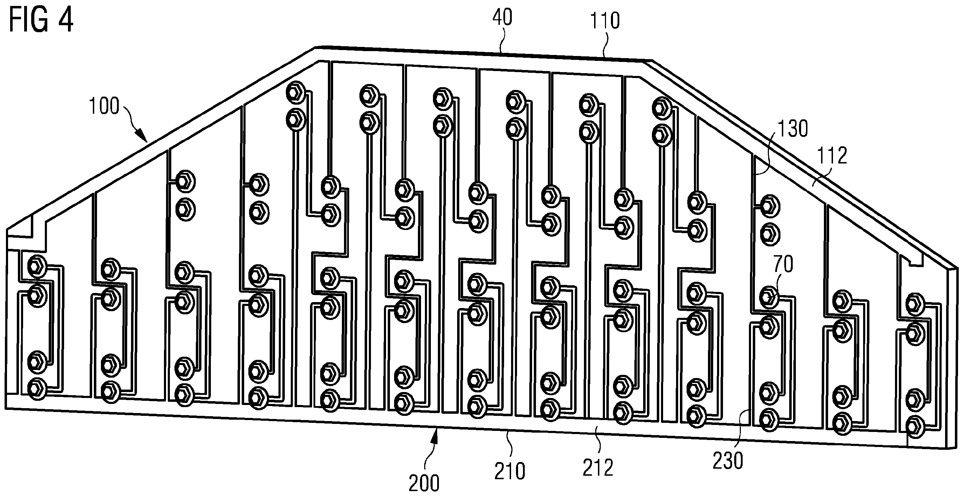

Figur 3 zeigt eine Ausführungsform der ersten Kühlmittelverteilerplatte 30, in die ein Teil von mindestens einem Kühlkreislaufsystem 100 zur Kühlung der Batteriemodule mittels einer Kühlflüssigkeit integriert ist. Figur 4 zeigt eine Ausführungsform der zweiten Kühlmittelverteilerplatte 40, in die ebenfalls ein Teil des mindestens einen Kühlkreislaufsystems 100 integriert ist. In die Kühlmittelverteilerplatte 30 kann beispielweise ein Vorlauf des Kühlmittelkreislaufs integriert sein, während in die Kühlmittelverteilerplatte 40 der Rücklauf des Kühlmittelkreislaufs integriert ist.

Das mindestens eine Kühlkreislaufsystem 100 umfasst einen Kühlverteiler 110 zum Verteilen der Kühlflüssigkeit auf die mehreren Batteriemodule 11, 12, 13 und 14. Der Kühlverteiler 110 umfasst einen Zuführungskanal 111 zum Zuführen der Kühlflüssigkeit zu den Batteriemodulen 11, 12, 13 und 14 und einen Rückführungskanal 112 zur Rückführung der Kühlflüssigkeit von den Batteriemodulen 11, 12, 13 und 14. Der Zuführungskanal 111 des Kühlverteilers 110 ist als eine Einfräsung in der ersten Kühlmittelverteilerplatte 30 ausgebildet (Figur 3). Der Rückführungskanal 112 ist als eine weitere Einfräsung in der zweiten Kühlmittelverteilerplatte 40 ausgebildet (Figur 4) .

Das mindestens eine Kühlkreislaufsystem 100 weist mehrere Vorlaufkanäle 120 zum Transport der Kühlflüssigkeit von dem Zuführungskanal 111 zu den Kühlplatten 16 auf. Wie in Figur 3 dargestellt ist, sind die Vorlaufkanäle 20 als in die erste Kühlmittelverteilerplatte 30 eingefräste Kanäle ausgebildet. Weiterhin weist das mindestens eine Kühlkreislaufsystem 100 mehrere Rücklaufkanäle 130 zum Abtransport der Kühlflüssigkeit von den Kühlplatten 16 zu dem Rückführungskanal 112 auf. Die Rücklaufkanäle 130 sind jeweils als in die zweite Kühlmittelverteilerplatte 40 eingefräste Kanäle ausgebildet (Figur 4) .

Wie Figur 3 zeigt, sind die Vorlaufkanäle 120 und der Zuführungskanal 111 des Kühlverteilers 100 derart in die erste Kühlmittelverteilerplatte 30 eingefräst, dass die Vorlaufkanäle 120 in den Zuführungskanal 111 einmünden. Wie weiter in Figur 4 gezeigt ist, sind die Rücklaufkanäle 130 und der Rückführungskanal 112 derart in die zweite Kühlmittelverteilerplatte 40 eingefräst, dass die Rücklaufkanäle 130 in den Rückführungskanal 112 einmünden.

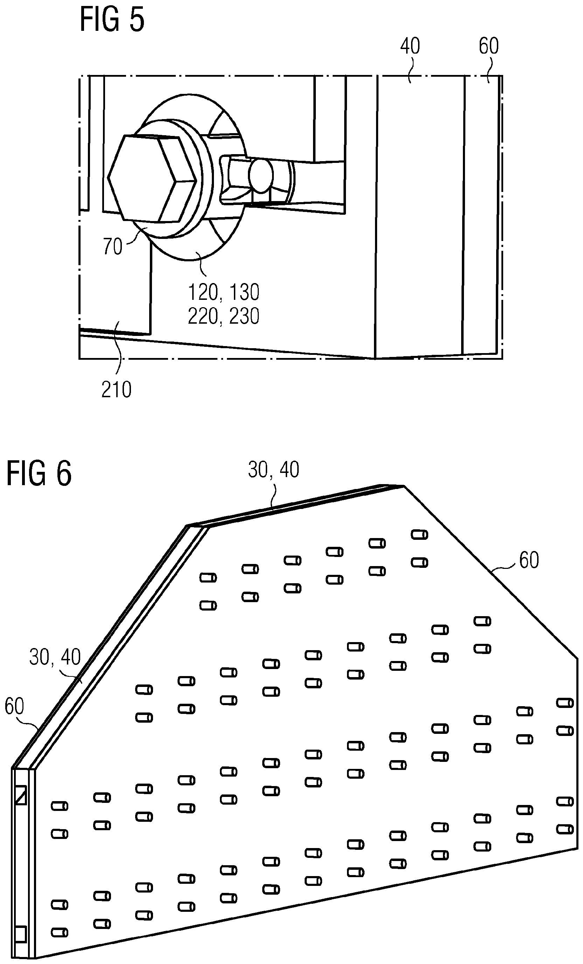

Die Kühlplatten 16 können mittels Hohlschrauben 70 mit den Trägerplatten 60, die an der ersten und zweiten Kühlmittelverteilerplatte 30 und 40 angeordnet sind, verschraubt sein. Figur 5 zeigt eine vergrößerte Darstellung der Kühlmittelverteilerplatte 40, die aus Gründen der vereinfachten Darstellung nur auf einer Seite mit der Trägerplatte 60 abgedeckt ist. Die in der Figur 5 dargestellten offenen Kanäle können durch eine weitere Trägerplatte 60, die wie in Figur 1 dargestellt an der Außenseite der Kühlmittelverteilerplatte angeordnet ist, abgedeckt werden. Alternativ kann für die Kanäle jedoch auch nur ein begrenzter Teil der Dicke des Materials der Kühlmittelverteilerplatte entfernt werden, sodass die Außenseite der Kühlmittelverteilerplatte gleichzeitig auch die Außenseite des Containers darstellt, deren Öffnungen lediglich de Durchführung von Hohlschrauben dienen.

Gemäß einer möglichen Ausführungsform der Energiespeicheranordnung, die in Figur 4 dargestellt ist, ragt jeweils eine der Hohlschrauben 70 in einen der Vorlaufkanäle 120 hinein, sodass jeder der Vorlaufkanäle 120 durch die jeweilige Hohlschraube 70 mit einer der Kühlplatten 16 strömungsmäßig verbunden ist. Ebenso ragt bei dieser Ausführungsform jeweils eine der Hohlschrauben 70 in einen der Rücklaufkanäle 130 hinein, sodass jeder der Rücklaufkanäle 130 durch die jeweilige Hohlschraube 70 mit einer der Kühlplatten 16 strömungsmäßig verbunden ist.

Neben der Figur 5 zeigt insbesondere Figur 3 die Hohlschrauben 70, die in die Vorlaufkanäle 120 hineinragen, und Figur 4 die Hohlschrauben 70, die in die Rücklaufkanäle 130 hineinragen. Im Bereich der Hohlschrauben ergibt sich eine Umlenkung des Kühlmittelstroms um 90° von den Vorlaufkanälen 120 in die Kühlplatten 16 beziehungsweise eine Umlenkung des Kühlmittelstroms um 90° aus den Kühlplatten 16 in die Rücklaufkanäle 130.

Gemäß der in den Figuren 3 und 4 dargestellten Ausführungsform der Kühlmittelverteilerplatten 30 und 40 lässt sich eine Energiespeicheranordnung mit einer redundanten Kühlmittelverteilung mittels zwei Kühlkreisläufen realisieren. Dazu weist die Kühlmittelverteilerplatte 30 zusätzlich zu dem Kühlkreislaufsystem 100 ein redundantes Kühlkreislaufsystem 200 auf. Das Kühlkreislaufsystem 200 umfasst einen Kühlverteiler 210 mit einem Zuführungskanal 211, der als eine Einfräsung in der ersten Kühlmittelverteilerplatte 30 ausgebildet ist, und mit einem Rückführungskanal 212, der als eine Einfräsung in der zweiten Kühlmittelverteilerplatte 40 ausgebildet ist. Entsprechend sind die Kühlplatten 16 über Vorlaufkanäle 220, die in der ersten Kühlmittelverteilerplatte 30 eingefräst sind, mit dem Zuführungskanal 211 strömungsmäßig gekoppelt. Des Weiteren sind die Kühlplatten 16 über Rücklaufkanäle 230, die in der zweiten Kühlmittelverteilerplatte 40 eingefräst sind, mit dem Rückführungskanal 212 strömungsmäßig gekoppelt. Die dargestellte Ausführungsform der Kühlmittelverteilerplatten 30 und 40 ermöglicht somit eine redundante Durchströmung der Kühlplatten 16.

Figur 6 zeigt die Kühlmittelverteilerplatte 30 beziehungsweise 40, auf der beidseitig jeweils eine Trägerplatte 60 angeordnet ist. Die Trägerplatte 60 dichtet die Verteilerkanäle, die in dem Material der Kühlmittelverteilerplatten 30 beziehungsweise 40 angeordnet beziehungsweise eingebracht sind, ab. Gleichzeitig bildet die Trägerplatte 60 eine Tragstruktur zum Tragen der Batteriemodule 11, 12, 13 und 14.

### Bezugszeichenliste

- 1: Energiespeicheranordnung
- 10: Stapel aus Batteriemodulen
- 11, 12, 13, 14: Batteriemodule/Batteriestränge
- 15: Batteriezellen
- 16: Kühlplatten
- 20: Bodenplatte
- 30: erste Kühlmittelverteilerplatte
- 40: zweite Kühlmittelverteilerplatte
- 50: Abdeckplatte
- 60: Trägerplatte
- 70: Hohlschraube
- 100: Kühlkreislaufsystem
- 110: Kühlverteiler
- 111: Zuführungskanal
- 112: Rückführungskanal
- 120: Vorlaufkanal
- 130: Rücklaufkanal
- 200: Kühlkreislaufsystem
- 210: Kühlverteiler
- 211: Zuführungskanal
- 212: Rückführungskanal
- 220: Vorlaufkanal
- 230: Rücklaufkanal
- 300: Container

## Patentansprüche

1. Energiespeicheranordnung, umfassend:
- einen Stapel (10) aus mehreren Batteriemodulen (11, 12, 13, 14), wobei die Batteriemodule (11, 12, 13, 14) jeweils Batteriezellen (15) und zumindest eine Kühlplatte (16) zum Kühlen der Batteriezellen (15) umfassen, und
- zumindest eine Kühlmittelverteilerplatte (30, 40), welche an einer Seite des Stapels (10) angeordnet ist und welche zumindest ein Kühlkreislaufsystem (100, 200) zur Kühlung der Batteriezellen (15) der Batteriemodule (11, 12, 13, 14) aufweist,
**dadurch gekennzeichnet, dass**
- das Kühlkreislaufsystem (100, 200) einen Kühlverteiler (110, 210) mit zumindest einen Zuführungskanal (111, 211) zum Zuführen der Kühlflüssigkeit zu den Batteriemodulen (11, 12, 13, 14) und zumindest einen Rückführungskanal (112, 212) zur Rückführung der Kühlflüssigkeit von den Batteriemodulen (11, 12, 13, 14) und eine Mehrzahl Vorlaufkanäle (120, 220) zum Transport der Kühlflüssigkeit von dem zumindest einen Zuführkanal (111, 211) zu den Kühlplatten (16) sowie eine Mehrzahl Rücklaufkanäle (130, 230) zum Abtransport der Kühlflüssigkeit von den Kühlplatten (16) zu dem zumindest einen Rückführungskanal (112, 212) aufweist, und wobei der Zuführungskanal (111, 211), der Rückführungskanal (112, 212), die Vorlaufkanäle (120, 220) und die Rücklaufkanäle (130, 230) jeweils als eine Einfräsung in der Kühlmittelverteilerplatte (30, 40) ausgebildet sind.

2. Energiespeicheranordnung nach Anspruch 1, wobei
- die zumindest eine Kühlmittelverteilerplatte eine erste Kühlmittelverteilerplatte (30), die an einer ersten Seite des Stapels (10) angeordnet ist, und eine zweite Kühlmittelverteilerplatte (40), die an einer zweiten, der ersten Seite des Stapels (10) gegenüber liegenden Seite angeordnet ist, umfasst, und
- der zumindest eine Zuführungskanal (111, 211) an der ersten Kühlmittelverteilerplatte (30) angeordnet ist und der zumindest eine Rückführungskanal (112, 212) an der zweiten Kühlmittelverteilerplatte (40) angeordnet ist.

3. Energiespeicheranordnung nach einem der vorhergehenden Ansprüche, wobei
- zumindest auf der dem Stapel (10) zuweisenden Seite der Kühlmittelverteilerplatte (30, 40) eine Trägerplatte (60) als Tragstruktur angeordnet ist, und
- die Batteriemodule (11, 12, 13, 14) an der Trägerplatte (60) der Kühlmittelverteilerplatte (30, 40) befestigt sind.

4. Energiespeicheranordnung nach Anspruch 1, wobei
- die Vorlaufkanäle (120, 220) und der zumindest eine Zuführungskanal (111, 211) derart in die Kühlmittelverteilerplatte (30) eingefräst sind, dass die Vorlaufkanäle (120, 220) in den Zuführungskanal (111, 211) einmünden, und
- die Rücklaufkanäle (130, 230) und der zumindest eine Rückführungskanal (112, 212) derart in die Kühlmittelverteilerplatte (40) eingefräst sind, dass die Rücklaufkanäle (130, 230) in den Rückführungskanal (112, 212) einmünden.

5. Energiespeicheranordnung nach Anspruch 3, wobei die Kühlplatten (16) mittels Hohlschrauben (70) mit der an der zumindest einen Kühlmittelverteilerplatte (30, 40) angeordneten Trägerplatte (60) verschraubt sind.

6. Energiespeicheranordnung nach Anspruch 5, wobei
- zumindest eine Hohlschraube (70) in einen jeweiligen Vorlaufkanal (120) hineinragt, sodass jeder Vorlaufkanal (120) durch zumindest eine Hohlschraube (70) mit einer Kühlplatte (16) strömungsmäßig verbunden ist, und
- zumindest eine Hohlschraube (70) in einen jeweiligen Rücklaufkanal (130) hineinragt, sodass jeder Rücklaufkanal (130) durch zumindest eine Hohlschraube (70) mit einer Kühlplatte (16) strömungsmäßig verbunden ist.

7. Energiespeicheranordnung nach Anspruch 2, wobei die mehreren Batteriemodule (11, 12, 13, 14) zwischen der ersten und der zweiten Kühlmittelverteilerplatte (30, 40) pyramidenförmig gestapelt sind.

8. Energiespeicheranordnung nach einem der vorhergehenden Ansprüche, wobei
die mehreren Batteriemodule (11, 12, 13, 14) untereinander als eine Traktionsbatterie verschaltet sind.

9. Container (300) zur Aufnahme von Batteriemodulen (11, 12, 13, 14), umfassend:
- eine Bodenplatte (20), auf der ein Stapel (10) aus einer Mehrzahl Batteriemodulen (11, 12, 13, 14) anordenbar ist, und
- eine Energiespeicheranordnung nach einem der Ansprüche 1 bis 8.

10. Container (300) nach Anspruch 9, ferner umfassend:
zumindest eine auf der dem Stapel (10) zuweisenden Seite der Kühlmittelverteilerplatte (30, 40) angeordnete Trägerplatte (60) als Tragstruktur zur Befestigung der Batteriemodule (11, 12, 13, 14).

11. Container (300) nach Anspruch 10, wobei
- die zumindest eine Trägerplatte (60) mittels Hohlschrauben (70) mit Kühlplatten (16) der Batteriemodule (11, 12, 13, 14) verschraubbar ist, und
- die Hohlschrauben (70) für eine strömungsmäßige Verbindung mit den Kühlplatten (16) in die Verteilerkanäle (111, 112, 120, 130, 220, 230) hineinragen.

12. Container (300) nach einem der Ansprüche 9 bis 11, wobei die zumindest eine Kühlmittelverteilerplatte eine erste Kühlmittelverteilerplatte (30), die an einer ersten Seite des Stapels (10) angeordnet ist, und eine zweite Kühlmittelverteilerplatte (40), die an einer zweiten, der ersten Seite des Stapels (10) gegenüber liegenden Seite angeordnet ist, umfasst.

13. Container (300) nach einem der Ansprüche 9 bis 12, wobei die Batteriemodule (11, 12, 13, 14) auf der Bodenplatte (20) pyramidenförmig stapelbar sind.

14. Fahrzeug, aufweisend zumindest eine Energiespeicheranordnung nach einem der Ansprüche 1 bis 8 oder einen Container (300) nach einem der Ansprüche 9 bis 13.

15. Fahrzeug nach Anspruch 14, ausgestaltet als ein spurgebundenes Fahrzeug.

## Claims

1. Energy storage arrangement, comprising:
- a stack (10) consisting of a plurality of battery modules (11, 12, 13, 14), wherein the battery modules (11, 12, 13, 14) each comprise battery cells (15) and at least one cooling plate (16) for cooling the battery cells (15), and
- at least one coolant distributor plate (30, 40), which is arranged on one side of the stack (10) and which has at least one cooling circuit system (100, 200) for cooling the battery cells (15) of the battery module (11, 12, 13, 14), **characterised in that**
- the cooling circuit system (100, 200) has a cooling distributor (110, 210) with at least one supply channel (111, 211) for suppling the cooling fluid to the battery modules (11, 12, 13, 14) and at least one return channel (112, 212) for returning the cooling fluid from the battery modules (11, 12, 13, 14) and a plurality of feed channels (120, 220) for transporting the cooling fluid from the at least one supply channel (111, 211) to the cooling plates (16), as well as a plurality of feedback channels (130, 230) for transporting the cooling fluid away from the cooling plates (16) and to the at least one return channel (112, 212), and wherein the supply channel (111, 211), the return channel (112, 212), the feed channels (120, 220) and the feedback channels (130, 230) are each embodied as a milled recess in the coolant distributor plate (30, 40).

2. Energy storage arrangement according to claim 1, wherein
- the at least one coolant distributor plate comprises a first coolant distributor plate (30), which is arranged on a first side of the stack (10), and a second coolant distributor plate (40), which is arranged on a second side lying opposite the first side of the stack (10), and
- the at least one supply channel (111, 211) is arranged on the first coolant distributor plate (30) and the at least one return channel (112, 212) is arranged on the second coolant distributor plate (40).

3. Energy storage arrangement according to one of the preceding claims, wherein
- a carrier plate (60) is arranged as a support structure, at least on the side of the coolant distributor plate (30, 40) facing towards the stack (10), and
- the battery modules (11, 12, 13, 14) are fastened on the carrier plate (60) of the coolant distributor plate (30, 40).

4. Energy storage arrangement according to claim 1, wherein
- the feed channels (120, 220) and the at least one supply channel (111, 211) are milled into the coolant distributor plate (30) in such a manner that the feed channels (120, 220) open into the supply channel (111, 211), and
- the feedback channels (130, 230) and the at least one return channel (112, 212) are milled into the coolant distributor plate (40) in such a manner that the feedback channels (130, 230) open into the return channel (112, 212).

5. Energy storage arrangement according to claim 3, wherein the cooling plates (16) are screwed to the carrier plate (60), which is arranged on the at least one coolant distributor plate (30, 40), by means of hollow screws (70).

6. Energy storage arrangement according to claim 5, wherein
- at least one hollow screw (70) protrudes into a respective feed channel (120), so that each feed channel (120) is connected in terms of flow to a cooling plate (16) by way of at least one hollow screw (70), and
- at least one hollow screw (70) protrudes into a respective feedback channel (130), so that each feedback channel (130) is connected in terms of flow to a cooling plate (16) by way of at least one hollow screw (70).

7. Energy storage arrangement according to claim 2, wherein the plurality of battery modules (11, 12, 13, 14) are stacked in a pyramid shape between the first and the second coolant distributor plate (30, 40).

8. Energy storage arrangement according to one of the preceding claims, wherein
the plurality of battery modules (11, 12, 13, 14) are interconnected as a traction battery.

9. Container (300) for accommodating battery modules (11, 12, 13, 14), comprising:
- a base plate (20), on which a stack (10) of a plurality of battery modules (11, 12, 13, 14) can be arranged, and
- an energy storage arrangement according to one of claims 1 to 8.

10. Container (300) according to claim 9, further comprising:
at least one carrier plate (60), which is arranged on the side of the coolant distributor plate (30, 40) facing towards the stack (10), as a support structure for fastening the battery modules (11, 12, 13, 14).

11. Container (300) according to claim 10, wherein
- the at least one carrier plate (60) can be screwed to cooling plates (16) of the battery modules (11, 12, 13, 14) by means of hollow screws (70), and
- the hollow screws (70) protrude into the distributor channels (111, 112, 120, 130, 220, 230) for a flow connection to the cooling plates (16).

12. Container (300) according to one of claims 9 to 11, wherein the at least one coolant distributor plate comprises a first coolant distributor plate (30), which is arranged on a first side of the stack (10), and a second coolant distributor plate (40), which is arranged on a second side lying opposite the first side of the stack (10).

13. Container (300) according to one of claims 9 to 12, wherein the battery modules (11, 12, 13, 14) can be stacked in a pyramid shape on the base plate (20).

14. Vehicle, having at least one energy storage arrangement according to one of claims 1 to 8 or a container (300) according to one of claims 9 to 13.

15. Vehicle according to claim 14, configured as a rail-bound vehicle.

## Revendications

1. Dispositif d'accumulation d'énergie, comprenant :
- un empilement (10) de plusieurs modules (11, 12, 13, 14) de batterie, les modules (11, 12, 13, 14) de batterie comprenant chacun des éléments (15) de batterie et au moins une plaque (16) de refroidissement pour refroidir les éléments (15) de batterie, et
- au moins une plaque (30, 40), formant répartiteur du fluide de refroidissement, qui est disposée d'un côté de l'empilement (10) et qui a au moins un système (100, 200) de circuit de refroidissement pour le refroidissement des éléments (15) de batterie des modules (11, 12, 13, 14) de batterie,
**caractérisé en ce que**
- le système (100, 200) de circuit de refroidissement a un répartiteur (110, 210) de refroidissement, ayant au moins un canal (111, 211) d'apport pour l'apport du liquide de refroidissement aux modules (11, 12, 13, 14) de batterie et au moins un canal (112, 212) de recyclage pour le retour du fluide de refroidissement des modules (11, 12, 13, 14) de batterie, et une pluralité de canaux (120, 220) préliminaires pour le transport de liquide de refroidissement du au moins un canal (111, 211) d'apport aux plaques (16) de refroidissement, ainsi qu'une pluralité de canaux (130, 230) de retour pour l'évacuation du liquide de refroidissement des plaques (16) de refroidissement au au moins un canal (112, 212) de recyclage, et dans lequel le canal (111, 211) d'apport, le canal (112, 212) de recyclage, les canaux (120, 220) préliminaires et les canaux (130, 230) de retour sont constitués chacun sous la forme d'un fraisage dans la plaque (30, 40) formant répartiteur de fluide de refroidissement.

2. Dispositif d'accumulation d'énergie suivant la revendication 1, dans lequel
- la au moins une plaque formant répartiteur de fluide de refroidissement comprend une première plaque (30) formant répartiteur de fluide de refroidissement, qui est disposée d'un premier côté de l'empilement (10), et une deuxième plaque (40) formant répartiteur de fluide de refroidissement, qui est disposée d'un deuxième côté, opposé au premier côté, de l'empilement (10), et
- le au moins un canal (111, 211) d'apport est disposé sur la première plaque (30) formant répartiteur de fluide de refroidissement et le au moins un canal (112, 212) de recyclage est disposé sur la deuxième plaque (40) formant répartiteur de fluide de refroidissement.

3. Dispositif d'accumulation d'énergie suivant l'une des revendications précédentes, dans lequel
- au moins du côté, tourné vers l'empilement (10), de la plaque (30, 40) formant répartiteur de fluide de refroidissement est disposée, comme structure porteuse, une plaque (60) support, et
- les modules (11, 12, 13, 14) de batterie sont fixés à la plaque (60) support de la plaque (30, 40) formant répartiteur de fluide de refroidissement.

4. Dispositif d'accumulation d'énergie suivant la revendication 1, dans lequel
- les canaux (120, 220) préliminaires et le au moins un canal (111, 211) d'apport sont fraisés dans la plaque (30) formant répartiteur de fluide de refroidissement, de manière à ce que les canaux (120, 220) préliminaires débouchent dans le canal (111, 211) d'apport, et
- les canaux (130, 230) de retour et le au moins un canal (112, 212) de recyclage sont fraisés dans la plaque (40) formant répartiteur de fluide de refroidissement, de manière à ce que les canaux (130, 230) de retour débouchent dans le canal (112, 212) de recyclage.

5. Dispositif d'accumulation d'énergie suivant la revendication 3, dans lequel
les plaques (16) de refroidissement sont vissées, au moyen de vis (70) creuses, à la plaque (60) support disposée sur la au moins une plaque (30, 40) formant répartiteur de fluide de refroidissement.

6. Dispositif d'accumulation d'énergie suivant la revendication 5, dans lequel
- au moins une vis (70) creuse pénètre dans un canal (120) préliminaire, de manière à ce que chaque canal (120) préliminaire communique fluidiquement avec une plaque (16) de refroidissement par au moins une vis (70) creuse, et
- au moins une vis (70) creuse pénètre dans un canal (130) de retour, de manière à ce que chaque canal (130) de retour communique fluidiquement avec une plaque (16) de refroidissement par au moins une vis (70) creuse.

7. Dispositif d'accumulation d'énergie suivant la revendication 2, dans lequel
les plusieurs modules (11, 12, 13, 14) de batterie sont empilés en forme de pyramide entre la première et la deuxième plaques (30, 40) formant répartiteur de fluide de refroidissement.

8. Dispositif d'accumulation d'énergie suivant l'une des revendications précédente, dans lequel
les plusieurs modules (11, 12, 13, 14) de batterie sont câblés entre eux en une batterie de traction.

9. Contenant (300) de logement de modules (11, 12, 13, 14) de batterie, comprenant :
- une plaque (20) de fond, sur laquelle un empilement (10) d'une pluralité de modules (11, 12, 13, 14) de batterie peut être disposé, et
- un dispositif d'accumulation d'énergie suivant l'une des revendications 1 à 8.

10. Contenant (300) suivant la revendication 9, comprenant, en outre :
comme structure porteuse pour la fixation des modules (11, 12, 13, 14) de batterie, au moins une plaque (60) support, disposée du côté, tourné vers l'empilement (10), de la plaque (30, 40) formant répartiteur de fluide de refroidissement.

11. Contenant (300) suivant la revendication 10, dans lequel
- la au moins une plaque (60) support peut être vissée au moyen de vis (70) creuses à des plaques (16) de refroidissement des modules (11, 12, 13, 14) de batterie, et
- les vis (70) creuses pénètres, pour donner une communication fluidique avec les plaques (16) de refroidissement, dans les canaux (111, 112, 120, 130, 220, 230) formant répartiteurs.

12. Contenant (300) suivant l'une des revendications 9 à 11, dans lequel la au moins une plaque formant répartiteur de fluide de refroidissement comprend une première plaque (30) formant répartiteur de fluide de refroidissement, qui est disposée d'un premier côté de l'empilement (10), et une deuxième plaque (40) formant répartiteur de fluide de refroidissement, qui est disposée d'un deuxième côté, opposé au premier côté, de l'empilement (10).

13. Contenant (300) suivant l'une des revendications 9 à 12, dans lequel
les modules (11, 12, 13, 14) de batterie peuvent être empilés en forme de pyramide sur la plaque (20) de fond.

14. Véhicule, comportant au moins un dispositif d'accumulation d'énergie suivant l'une des revendications 1 à 8 ou un contenant (300) suivant l'une des revendications 9 à 13.

15. Véhicule suivant la revendication 14, conformé en véhicule guidé sur rail.
